# FASCICULE DE BREVET EUROPEEN

(11) **EP 2 098 447 B1**
(45) Date de publication et mention de la délivrance du brevet: **01.06.2016**
(21) Numéro de dépôt: 09154352.0
(22) Date de dépôt: 04.03.2009
(51) Int. Cl.: B63H 5/125, H02K 1/20, H02K 1/32, H02K 9/04

(54) **Système de ventilation de machine électrique tournante**
Belüftungssystem einer elektrisch umlaufenden Maschine
Ventilation system of a rotating electric machine

(30) Priorité: 06.03.2008 FR 0851469
(43) Date de publication de la demande: 09.09.2009
(73) Titulaire: GE Energy Power Conversion France SAS, 91300 Massy (FR)
(72) Inventeur: Bittermann, Mathieu, 54320 Maxeville (FR); Gazin, Christophe, 54670 Custines (FR)
(74) Mandataire: Serjeants LLP

(56) Documents cités:
- EP-A- 1 408 600
- WO-A-03/047962
- DE-A1- 10 310 307
- DE-C- 720 154
- JP-A- 2000 278 914
- US-A- 2 887 593
- US-B1- 6 312 298

## Description

La présente invention concerne une machine électrique tournante, et plus particulièrement une telle machine comprenant, disposés concentriquement depuis l'axe de la machine vers l'extérieur, un arbre, un rotor solidaire de l'arbre et un stator, le rotor et le stator comportant des paquets de tôles magnétiques séparés par des moyens d'écartement.

De telles machines sont bien connues dans la technique, notamment dans le document JP-A-2000 278914, qu'il s'agisse de génératrices ou de moteurs, par exemple de moteurs asynchrones.

Le document WO-A-03/047962 décrit un propulseur de navire comprenant une nacelle suspendue sous la coque du navire par une jambe et un moteur électrique disposé dans la nacelle, ladite nacelle comportant une enveloppe. Le moteur électrique comprend, disposé concentriquement depuis l'axe du moteur vers l'extérieur, un arbre, un rotor solidaire de l'arbre et un stator. Le stator comporte des paquets de tôles magnétiques séparés par des moyens d'écartement. Le moteur électrique comprend également des moyens d'amenée d'air de ventilation dans des premiers moyens de circulation axiale de l'air au niveau du rotor, des deuxièmes moyens de circulation axiale de l'air de ventilation au niveau du stator, et des moyens de récupération d'air collectant l'air de ventilation sortant des deuxièmes moyens de circulation. L'air de ventilation est ainsi amené à circuler axialement dans les premiers moyens de circulation d'air, puis radialement entre les paquets de tôles du stator, puis à nouveau axialement dans les deuxièmes moyens de circulation d'air.

Un des problèmes soulevés par l'utilisation de ces machines est celui de leur refroidissement. Elles dégagent en effet une quantité de chaleur relativement importante, essentiellement du fait des pertes par effet joule, chaleur qu'il y a lieu d'évacuer pour permettre à la machine de fonctionner à une température acceptable. Ce problème est particulièrement aigu lorsque ces machines doivent fonctionner dans un espace confiné, comme cela est notamment le cas des moteurs électriques de navire logés en nacelle.

Une première solution a été de créer un flux d'air de refroidissement axial, depuis une extrémité axiale de la machine jusqu'à l'extrémité opposée. L'inconvénient de cet agencement réside dans le gradient axial de température, celle-ci étant plus élevée du côté de la sortie d'air que du côté de l'entrée.

On a également proposé de réaliser une entrée d'air de refroidissement à chaque extrémité axiale de la machine. Mais, à défaut de contrôler efficacement le trajet suivi par l'air, on obtient alors un gradient de température dans les directions radiale et circonférentielle.

La présente invention vise à palier ces inconvénients.

Plus particulièrement, l'invention a pour but de fournir un système de ventilation de machine électrique tournante qui limite les gradients de température.

A cet effet, l'invention a tout d'abord pour objet une machine électrique tournante comprenant, disposés concentriquement depuis l'axe de la machine vers l'extérieur, un arbre, un rotor solidaire de l'arbre et un stator, le rotor et le stator comportant des paquets de tôles magnétiques séparés par des moyens d'écartement, cette machine comprenant :
- des moyens d'amenée d'air pour amener de l'air de ventilation à pénétrer dans la machine axialement dans des premiers moyens de circulation d'air aptes à permettre une circulation axiale de l'air de ventilation au niveau du rotor ;
- des deuxièmes moyens de circulation d'air aptes à permettre une circulation axiale de l'air de ventilation au niveau du stator ;
- des moyens de récupération d'air pour collecter l'air de ventilation sortant des deuxièmes moyens de circulation d'air ;
de sorte que l'air de ventilation est amené à circuler dans la machine successivement :
- axialement dans lesdits premiers moyens de circulation d'air ;
- radialement entre lesdits paquets de tôles du rotor, puis du stator, et entre leurs moyens d'écartement respectifs ;
- axialement dans lesdits deuxièmes moyens de circulation d'air.

Dans une machine selon l'invention, la circulation de l'air de refroidissement se fait donc pour partie axialement, selon un tronçon de trajet au voisinage de l'axe et un autre tronçon vers l'extérieur de la machine, et pour partie radialement entre le tronçon au voisinage de l'axe et le tronçon extérieur. La circulation d'air radiale se répartissant entre tous les paquets de tôles, l'ensemble de la machine est refroidi efficacement et une bonne homogénéité de température est obtenue.

Dans un mode de réalisation particulier, lesdits moyens d'amenée d'air sont agencés pour amener l'air de ventilation aux deux extrémités axiales de la machine et lesdits moyens de récupération d'air sont agencés pour collecter également l'air de ventilation aux deux extrémités axiales de la machine.

On adopte donc ici la double entrée d'air connue en elle-même dans l'art antérieur.

Egalement dans un mode de réalisation particulier, lesdits premiers moyens de circulation d'air comprennent des trous percés axialement dans les paquets de tôles du rotor.

En variante, ou en combinaison, lesdits premiers moyens de circulation d'air comprennent des espaces ménagés entre l'arbre et le rotor.

Plus particulièrement, lesdits espaces ménagés entre l'arbre et le rotor peuvent comprendre des cannelures à la périphérie desquelles les tôles de rotor sont frettées.

Egalement dans un mode de réalisation particulier, lesdits deuxièmes moyens de circulation d'air comprennent des trous percés axialement dans les paquets de tôles du stator.

Ce mode de réalisation est particulièrement adapté au cas où le stator de la machine est fretté dans un carter extérieur, comme c'est le cas d'un moteur de navire en nacelle, dont le stator est fretté dans l'enveloppe de la nacelle. Il n'y a en effet, dans ce cas, pas de possibilité de circulation d'air de refroidissement à l'extérieur du moteur.

Dans un autre mode de réalisation, lesdits deuxièmes moyens de circulation d'air comprennent des espaces ménagés à la périphérie extérieure des paquets de tôles du stator.

Il peut s'agir d'un volume annulaire ménagé tout autour de la machine ou de découpes formées à la périphérie extérieure des paquets de tôles du stator.

Egalement dans un mode de réalisation particulier, lesdits moyens d'écartement comprennent des entretoises radiales.

Dans un autre mode de réalisation, lesdits moyens d'écartement comprennent des tiges axiales.

Ces deux derniers modes de réalisation peuvent d'ailleurs être combinés, les paquets de tôles du rotor, par exemple, étant séparés par des entretoises radiales, tandis que les paquets de tôles du stator sont séparés par des tiges axiales.

Egalement dans un mode de réalisation particulier, lesdits moyens d'amenée d'air comprennent au moins une chambre de distribution annulaire formée à une extrémité de la machine et lesdits moyens de récupération d'air comprennent une chambre de collecte annulaire entourant ladite chambre de distribution.

Dans le cas d'une machine à double entrée d'air, une chambre de distribution annulaire et une chambre de collecte annulaire concentriques sont prévues à chaque extrémité radiale de la machine.

L'invention a également pour objet un navire comportant un propulseur en nacelle équipé d'une machine telle que décrite ci-dessus.

On décrira maintenant, à titre d'exemple non limitatif, un mode de réalisation particulier de l'invention, en référence aux dessins schématiques annexés dans lesquels :
- la figure 1 est une vue en perspective éclatée d'une nacelle de propulsion de navire comportant un moteur selon l'invention ;
- la figure 2 est une vue en perspective d'un secteur angulaire de cette nacelle ; et
- la figure 3 est une vue en coupe transversale, perpendiculaire à l'axe, de cette nacelle.

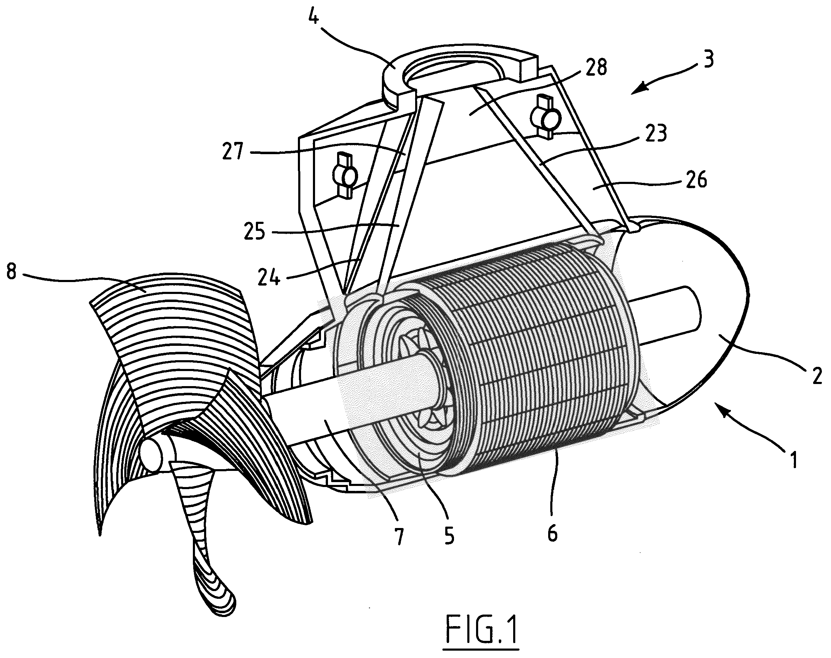

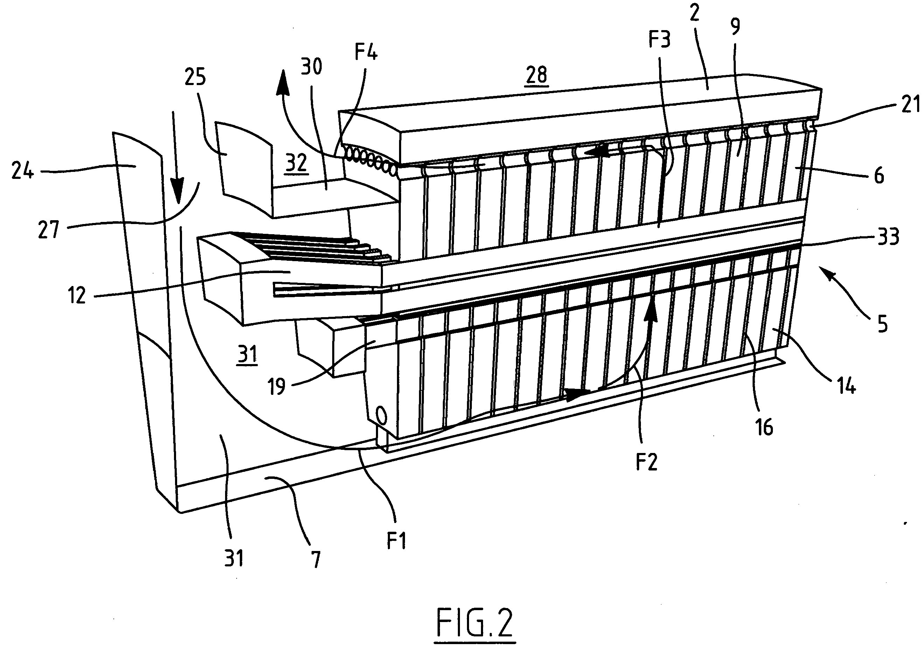

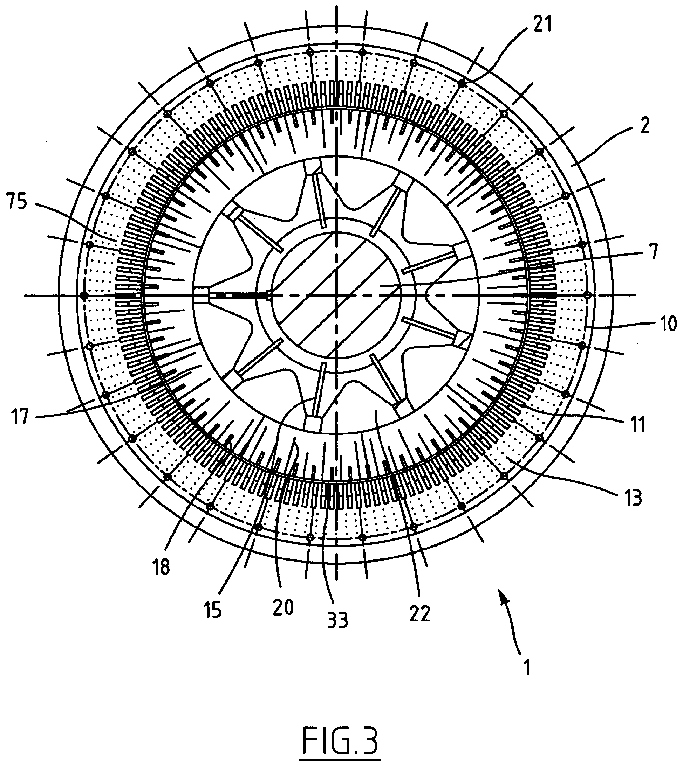

La nacelle 1 de la figure 1 comprend d'une manière générale une enveloppe 2 suspendue sous la coque d'un navire par une jambe 3 (non représentée aux figures 2 et 3). La jambe 3 est elle-même fixée à la coque du navire par un palier 4 permettant de façon connue son orientation autour d'un axe sensiblement vertical.

La nacelle 1 reçoit de façon coaxiale un moteur électrique 5 dont le stator 6 est fretté dans l'enveloppe 2. L'arbre 7 du moteur 5 est généralement coaxial à l'enveloppe 2 de la nacelle et porte, à l'arrière de cette dernière, une hélice 8.

Le stator 6 est formé de paquets 9 (figure 2) de tôles magnétiques 10 comportant des encoches 11 découpées dans lesquelles sont logés les enroulements conducteurs 12 du stator. Les paquets 9 de tôles sont maintenus écartés par des tiges axiales 13.

Le rotor 14 du moteur 5 est monté solidaire de l'arbre 7 par l'intermédiaire de bras 15 de rotor, formant entre eux des cannelures et sur les extrémités desquels le rotor est fretté. Le rotor 14 est formé de paquets 16 (figure 2) de tôles magnétiques 17 comportant des encoches 18 découpées dans lesquelles sont logés les enroulements conducteurs 19 du rotor. Les paquets 6 de tôles sont maintenus écartés par des entretoises en I 20.

Des trous 21 formés axialement dans les paquets 9 de tôles 10 du stator forment des passages de ventilation pour de l'air de refroidissement. De même, les espaces 22 ménagés entre les bras 15 de rotor forment également des passages de ventilation pour de l'air de refroidissement.

Des tôles 23 à l'avant de la jambe 3, et 24 et 25 à l'arrière, délimitent deux conduits d'amenée d'air de refroidissement 26 et 27, respectivement à l'avant et à l'arrière de la jambe 3, et un conduit de récupération d'air de refroidissement 28 dans la partie centrale de la jambe.

Une virole en tôle 30 délimite à chaque extrémité axiale du moteur 5 deux chambres annulaires concentriques 31 et 32, la chambre 32 entourant la chambre 31. La virole intérieure a un rayon légèrement supérieur à celui de l'arbre moteur 7 et la virole 30 extérieure a un rayon légèrement inférieur à la distance à l'axe des trous 21.

La chambre intérieure 31 formée entre la virole 30 et l'arbre 7 forme un distributeur pour l'air de refroidissement entrant. Cette chambre est reliée en amont dans le sens de ventilation, au conduit d'amenée d'air de refroidissement 27, respectivement 26, du côté extérieur de la chambre par rapport à l'axe du moteur, et en aval aux extrémités des espaces 22 du côté intérieur de la chambre.

La chambre extérieure 32 formée entre la virole 30 et l'enveloppe 2 de la nacelle forme un collecteur pour l'air de refroidissement sortant. Cette chambre est reliée en aval dans le sens de ventilation, au conduit de récupération d'air de refroidissement 28, du côté extérieur de la chambre par rapport à l'axe du moteur, et en amont aux extrémités des passages formés par les trous 21.

Une centrale de ventilation non représentée est disposée dans la coque du navire pour assurer le refroidissement de l'air de ventilation et sa circulation forcée. Cette centrale envoie l'air froid dans les conduits d'amenée d'air de refroidissement 26 et 27, et récupère l'air chaud du conduit de récupération d'air de refroidissement 28.

L'air de refroidissement pénètre dans le moteur depuis les chambres de distribution 31 et en ressort dans les chambres de collecte 32. Depuis les chambres 31, l'air circule axialement dans les espaces 22 en direction du centre du moteur (flèche F1 sur la figure 2), tout en se répartissant radialement au fur et à mesure entre les paquets 16 de tôles magnétiques 17 du rotor et entre les entretoises radiales 20 (flèche F2).

L'air de refroidissement traverse ensuite l'entrefer 33 du moteur, entre le rotor 14 et le stator 6, puis circule entre les paquets 9 de tôles magnétiques 10 du stator et entre les tiges axiales 13 (flèche F3).

L'air de refroidissement pénètre ensuite dans les trous 21 et circule de nouveau axialement d'un trou à l'autre jusqu'aux chambres 32 (flèche F4).

## Revendications

1. Propulseur de navire du type comprenant une nacelle (1) propre à être suspendue sous une coque du navire par une jambe (3), et une machine électrique tournante (5) disposée dans la nacelle (1), ladite nacelle (1) comportant une enveloppe (2), et ladite machine électrique tournante (5) comprenant, disposés concentriquement depuis l'axe de la machine (5) vers l'extérieur, un arbre (7), un rotor (14) solidaire de l'arbre et un stator (6), le rotor et le stator comportant des paquets (16, 9) de tôles magnétiques (17, 10) séparés par des moyens d'écartement (20, 13), le stator (6) étant fretté dans l'enveloppe (2),
la machine électrique (5) comprenant :
- des moyens (26, 27, 31) d'amenée d'air pour amener de l'air de ventilation à pénétrer dans la machine (5) axialement dans des premiers moyens de circulation d'air aptes à permettre une circulation axiale de l'air de ventilation au niveau du rotor ;
- des deuxièmes moyens (21) de circulation d'air aptes à permettre une circulation axiale de l'air de ventilation au niveau du stator ;
- des moyens (28, 32) de récupération d'air pour collecter l'air de ventilation sortant des deuxièmes moyens de circulation d'air ;
de sorte que l'air de ventilation est amené à circuler dans la machine successivement :
- axialement (F1) dans lesdits premiers moyens de circulation d'air ;
- radialement (F2, F3) entre lesdits paquets de tôles du rotor, puis du stator, et entre leurs moyens d'écartement respectifs ;
- axialement (F4) dans lesdits deuxièmes moyens de circulation d'air (21), **caractérisé en ce que** lesdits premiers moyens de circulation d'air comprennent des espaces (22) ménagés entre l'arbre et le rotor.

2. Propulseur selon la revendication 1, dans lequel lesdits moyens d'amenée d'air sont agencés pour amener l'air de ventilation aux deux extrémités axiales de la machine et lesdits moyens de récupération d'air sont agencés pour collecter également l'air de ventilation aux deux extrémités axiales de la machine.

3. Propulseur selon l'une quelconque des revendications précédentes, dans lequel lesdits premiers moyens de circulation d'air comprennent des trous percés axialement dans les paquets de tôles du rotor.

4. Propulseur selon l'une quelconque des revendications précédentes, dans lequel lesdits espaces (22) ménagés entre l'arbre et le rotor comprennent des cannelures à la périphérie desquelles les tôles de rotor sont frettées.

5. Propulseur selon l'une quelconque des revendications précédentes, dans lequel lesdits deuxièmes moyens de circulation d'air (21) comprennent des trous percés axialement dans les paquets de tôles du stator.

6. Propulseur selon l'une quelconque des revendications précédentes, dans lequel lesdits moyens d'écartement comprennent des entretoises radiales (20).

7. Propulseur selon l'une quelconque des revendications précédentes, dans lequel lesdits moyens d'écartement comprennent des tiges axiales (13).

8. Propulseur selon l'une quelconque des revendications précédentes, dans lequel lesdits moyens d'amenée d'air comprennent au moins une chambre de distribution annulaire (31) formée à une extrémité de la machine et lesdits moyens de récupération d'air comprennent une chambre de collecte annulaire (32) entourant ladite chambre de distribution.

9. Navire, **caractérisé par le fait qu'**il comporte une coque et un propulseur selon l'une quelconque des revendications précédentes, le propulseur étant fixé sous la coque du navire par une jambe (3).

## Patentansprüche

1. Schiffsantrieb der Art aufweisend eine Gondel (1), die dazu eingerichtet ist unter dem Rumpf des Schiffes mittels einer Strebe (3) aufgehängt zu werden und eine drehende elektrische Maschine (5), die in der Gondel (1) angeordnet ist, wobei diese Gondel (1) ein Gehäuse (2) aufweist, und diese drehende elektrische Maschine (5) eine konzentrisch zur Achse der Maschine (5) nach außen angeordnete Welle (7), einen fest mit der Welle verbundenen Rotor (14) und einen Stator (6) aufweist, wobei der Rotor und der Stator Pakete (16, 9) aus Magnetblechen (17, 10) aufweisen, die durch Abstandsmittel (20, 13) getrennt sind, wobei der Stator (6) im Gehäuse (2) mit Presssitz angeordnet ist, wobei die elektrische Maschine (5) aufweist:
- Lufteinbringungsmittel (26, 27, 31) zum Einbringen von Ventilationsluft zum axialen Durchsetzen der Maschine (5) in ersten Luftzirkulationsmitteln, die eingerichtet sind, um eine axiale Zirkulation der Ventilationsluft auf dem Niveau des Rotors zu ermöglichen;
- zweite Luftzirkulationsmittel (21), die eingerichtet sind, um eine axiale Zirkulation der Ventilationsluft auf dem Niveau des Stators zu ermöglichen;
- Mittel (28, 32) zur Rückgewinnung der Luft, um die Ventilationsluft, die die zweiten Luftzirkulationsmittel verlässt, aufzunehmen;
derart, dass die Ventilationsluft zum Zirkulieren wie folgt in die Maschine eingebracht ist:
- axial (F1) in die ersten Luftzirkulationsmittel;
- radial (F2, F3) zwischen die Blechpakete des Rotors, dann des Stators und zwischen die jeweiligen Abstandsmittel;
- axial (F4) in die zweiten Luftzirkulationsmittel (21),
**dadurch gekennzeichnet, dass** die ersten Luftzirkulationsmittel Freiräume (22) aufweisen, die zwischen der Welle und dem Rotor vorhanden sind.

2. Antrieb nach Anspruch 1, bei dem die Lufteinbringungsmittel gebildet sind, um Ventilationsluft zu den zwei axialen Enden der Maschine zu bringen und die Mittel zur Rückgewinnung der Luft gebildet sind, um auch Luft an den zwei axialen Enden der Maschine aufzunehmen.

3. Antrieb nach irgendeinem der vorhergehenden Ansprüche, bei dem die ersten Luftzirkulationsmittel Löcher aufweisen, die die Blechpakete des Rotors axial durchsetzen.

4. Antrieb nach irgendeinem der vorhergehenden Ansprüche, bei dem die Freiräume (22), die zwischen der Welle und dem Rotor angeordnet sind, Nuten aufweisen, an deren Peripherie die Rotorbleche mit Presssitz angeordnet sind.

5. Antrieb nach irgendeinem der vorhergehenden Ansprüche, bei dem die zweiten Luftzirkulationsmittel (21) Löcher aufweisen, die die Pakete der Statorbleche axial durchsetzen.

6. Antrieb nach irgendeinem der vorhergehenden Ansprüche, bei dem die Abstandsmittel Radialabstandselemente (20) aufweisen.

7. Antrieb nach irgendeinem der vorhergehenden Ansprüche, bei dem die Abstandsmittel Axialstege (13) aufweisen.

8. Antrieb nach irgendeinem der vorhergehenden Ansprüche, bei dem die Lufteinbringungsmittel zumindest eine ringförmige Verteilkammer (31) aufweisen, die an einem der Ende der Maschine gebildet ist und die Mittel zur Rückgewinnung von Luft eine ringförmige Sammelkammer (32) aufweisen, die die Verteilkammer umschließt.

9. Schiff, **gekennzeichnet dadurch, dass** es einen Rumpf aufweist und einen Antrieb nach irgendeinem der vorhergehenden Ansprüche, wobei der Antrieb durch eine Strebe (3) unter dem Rumpf des Schiffes angebracht ist.

## Claims

1. Ship's propulsion unit of the type comprising a gondola (1) able to be suspended below a ship's hull via a leg (3), and a rotating electrical machine (5) arranged in the gondola (1), said gondola (1) comprising a casing (2) and said rotating electrical machine (5) comprising, arranged concentrically from the machine axis (5¹) towards the outside, a shaft (7), a rotor (14) fixed to the shaft, and a stator (6), the rotor and the stator comprising packets (16, 9) of magnetic sheets (17, 10) separated by spacing means (20, 13), the stator (6) being bound in the casing (2), the electrical machine (5) comprising:
- air supply means (26, 27, 31) for bringing ventilation air to penetrate axially into the machine (5) into first air circulation means able to allow an axial flow of ventilation air at the rotor;
- second air circulation means (21) able to allow an axial flow of ventilation air at the stator;
- air recovery means (28, 32) for collecting the ventilation air leaving the two air circulation means;
such that the ventilation air is brought to circulate in the machine successively:
- axially (F1) in said first air circulation means;
- radially (F2, F3) between said sheet packets of the rotor, then of the stator, then between their respective spacing means;
- axially (F4) in said second air circulation means;
**characterized in that** said first air circulation means comprise spaces (22) arranged between the shaft and the rotor.

2. Propulsion unit according to claim 1, wherein said air supply means are arranged to bring the ventilation air to the two axial ends of the machine, and said air recovery means are arranged also to collect the ventilation air at the two axial ends of the machine.

3. Propulsion unit according to one of the preceding claims, wherein the first air circulation means comprise holes drilled axially in the sheet packets of the rotor.

4. Propulsion unit according to any of the preceding claims, wherein said spaces (22) arranged between the shaft and the rotor comprise grooves, on the periphery of which said rotor sheets are bound.

5. Propulsion unit according to any of the preceding claims, wherein said second air circulation means (21) comprise holes drilled axially in the sheet packets of the stator.

6. Propulsion unit according to any of the preceding claims, wherein said spacing means comprise radial struts (20).

7. Propulsion unit according to any of the preceding claims, wherein said spacing means comprise axial rods (13).

8. Propulsion unit according to any of the preceding claims, wherein said air supply means comprise at least one annular distribution chamber (31) formed at one end of the machine, and said air recovery means comprise an annular collection chamber (32) surrounding said distribution chamber.

9. Ship, **characterized in that** it comprises a hull and a propulsion unit according to any of the preceding claims, the propulsion unit being attached below the ship's hull via a leg (3).
